# NEW EUROPEAN PATENT SPECIFICATION

(11) **EP 0 690 083 B2**
(45) Date of publication and mention of the opposition decision: **01.12.2010**
(45) Mention of the grant of the patent: 13.12.2000
(21) Application number: 95201731.7
(22) Date of filing: 26.06.1995
(51) Int. Cl.: C08G 12/40, C04B 24/22

(54) **Use of an aqueous solution of a polycondensate as additive for hydraulically setting mortars**
Verwendung einer wässrigen Lösung eines Polykondensates als Additiv für hydraulische Mörtel
Emploi d'une solution aqueuse d'un polycondensat comme additif pour mortiers hydrauliques

(30) Priority: 28.06.1994 NL 9401079
(43) Date of publication of application: 03.01.1996
(73) Proprietor: METS HOLDING B.V., 6731 EG Otterlo (NL)
(72) Inventor: Mets, Benjamin, NL-6731 EG Otterlo (NL)
(74) Representative: van Westenbrugge, Andries

(56) References cited:
- EP-A- 0 059 353
- EP-A1- 0 219 132
- EP-A1- 0 326 125
- EP-A1- 0 557 211
- WO-A-91/12214
- WO-A1-91/12214
- DE-A- 2 505 578
- DE-A- 3 224 107
- DE-A1- 3 224 107
- US-A- 5 071 945

## Description

The invention relates to the use of an aqueous solution of a polycondensate obtainable by
a) preparing, in a first step, an aqueous solution of a precondensate composed of: at least one compound I containing at least two amino groups, at least one aldehyde II, at least one sulphonating agent III and, optionally, one or more co-reacting agents IV;
b) converting, in a second step, the precondensate obtained in step a) into a polycondensate at a lower pH than in step a).

Such a process is disclosed in German Offenlegungsschrift 2 505 578. In particular, the latter concerns the preparation of an aqueous solution of melamine/formaldehyde condensation products containing sulphonic acid groups, in which
a) melamine, formaldehyde and an alkali-metal sulphite in a molar ratio of 1:2.8 to 3.2:0.9 to 1.1 is heated in an aqueous solution at a temperature of 60 - 80°C and a pH of 10 - 13 until sulphite can no longer he detected.
b) after adjusting to a pH of 3.0 - 4.5, heating is continued at a temperature of 30 - 60°C for 30 - 90 minutes, and
c) after adjusting to a pH of 7.5 to 9.0, the condensation product is heated at a temperature of 70 - 95°C until the viscosity has a value of 5 to 40 cP at 20°C and a solids content of 20%.

In step a), up to 40 mol% of the melamine can be replaced by urea and the molar ratio of the mixture of melamine and urea to formaldehyde is 1:2.3 to 3.2. The condensation products prepared in this way are used in the form of a solution having a solids content of 30 - 50% by weight for improving building materials, in particular as a concrete processing aid, i.e. as so-called super-plasticizer.

The preparation of super-plasticizers is also disclosed, for example, in DE-A-3 107 852, WO 91/12214, EP-A 0 326 125 and EP-A-0 336,165, as well as in the prior art which is cited in said patent publications.

According to the literature mentioned above, in the preparation of the present condensation products, all the ingredients are added to a reaction vessel during the first sulphonation phase. After sulphite can no longer be detected, condensation is carried out in an acid medium until the desired viscosity is reached and the medium is rendered alkaline in order to stop the condensation and to ensure the stability during storage.

The known processes yield products having properties which still leave something to be desired. In addition, the processes according to the prior art are still capable of improvement.

DE 3224107 relates to a process of the type as described in the preamble and relates in particular to a preparation of precursors for foam. These precursors are reactive substances which are combined with an acid catalyst, a surfactant and air to form a foam which is cured. A better storage stability of such precursors is obtained by the addition of inorganic salts such as sulphites (sulphonating agent). DE-A-3224107 discloses that no more than about 15 weight % of such sulphonating agents may be used without detrimental effects in the end product. The amount of 15 weight % corresponds with about 0.2 mol of sodium sulphite, which means that only a small part of the reactive methyl formaldehyde condensate is sulphonated.

An expedient process of the type described in the introduction was found which yields advantageous products. These advantages will be dealt with in greater detail below.

The invention relates to the u se of an aqueous solution of a polycondensate, obtainable by
a) preparing, in a first step, an aqueous solution of a precondensate composed of: at least one compound I containing at least two amino groups, at least one aldehyde II, at least one sulphonating agent III and, optionally, one or more co-reacting agents IV;
b) converting, in a second step, the precondensate obtained in step a) into a polycondensate at a lower pH than in step a),
wherein
a) in the first step, the following amounts of the reagents are used per mol of the compound I:
   2.8 - 6 mol of the aldehyde II,
   0.8 - 2.5 mol of the sulphonating agent III, and
   0 - 3 mol of the co-reacting agent IV;
b) and in the second step, 0.1 - 1 mol of the additional amount of the compound I, again based on 1 mol of the compound I, and
wherein, at the end of step a) any excess of unreacted compound I is reacted with an oxidizing agent and, in step b) an additional amount of the compound I is added to the precondensation product,
wherein compound I is chosen from the group comprising amino-s-triazines, melamine, urea, thiourea, guanidine, dicyanodiamines, aminocarboxylic acids, aminodicarboxylic acids, aminosulphonic acids and carpolactams,
wherein aldehyde II is chosen from the group comprising formaldehyde, acetaldehyde, butyraldehyde, furfuraldehyde and benzaldehyde,
wherein the sulphonating agent III is chosen from the group comprising alkali-metal and alkaline-earth-metal sulphite and alkali-metal and alkaline-earth-metal sulphamate, and
wherein the co-reacting agent (IV) is chosen from the group comprising naphtalenesulphonic acid, mono- and dibenzoic acid, toluene-, xylene- and cumenesulphonic acids (including o-, p- and m-derivatives), fatty acid amine oxides, betaine, quaternary ammonium compounds, ether carboxylic acids, aminosulphonic acids, amino acids, aminocarboxylic acids, aminodicarboxylic acids, hydroxycarboxylic acids, hydroxycarboxylic acid lactones, polyhydroxycarboxylic acid lactones, sulphamic acids, a boron-containing polyhydroxycarboxylic acid or a water-soluble alkali-metal salt or alkaline-earth-metal salt of such an acid which, as such, has the formula 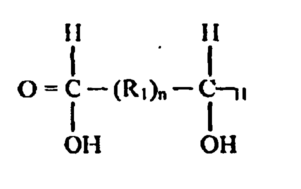 in which
R₁ is 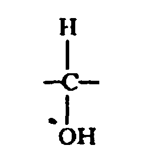 and n = 3 - 8, preferably 4 - 6,
a compound having the general formula

Ar O-[R₁]ₙ-R₂,

where Ar is an optionally substituted benzene radical or naphtalene radical, R₁ is an oxyethylene group, -CH₂CH₂O-, or an oxypropylene group, 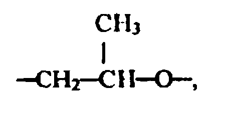 an oxyethylene chain or an oxypropylene chain containing not more than 15 oxyethylene groups or oxypropylene groups, or a combination of oxyethylene groups and oxypropylene groups in a chain, the sum of said groups being not more than 15; the mean value η for n is 1 - 15 and R₂ is hydrogen or in which R₂ is a group having the formula 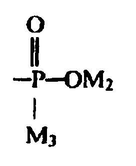 in which M₂ is a hydrogen ion or alkali metal ion and M₃ is -[R₁]ₙ-O Ar, R₁, n and Ar having the abovementioned meaning,
ketones, aliphatic and/or aromatic carboxamides such as formamide, acetamide, propionamide, butyramide, methacrylamide or benzamide, an acid containing at least one SH group or a salt of such an acid, for example a mercaptosulphonic acid or a mercaptocarboxylic acid, as additive for hydraulically setting mortars.

In this description the expression "process according to the invention" refers to the general method of preparation resulting in aqueous solutions which are used according to the present invention.

In general, the cheap sodium sulphite can be used as the sulphonating agent III.

In the process according to the invention, a co-reacting agent IV may optionally be used. This may be, for example, an agent which promotes the solubility. As compounds IV, mention may be made, in particular, of the additives which are described in DE-A-3 107 852, DE-A-3 410 820, DE-A-3 609 802, EP-A-0 557 211 and WO 91/12214 (=EP 515.529 B1).

The co-reacting compound IV preferably contains an acid group and another functional group, such as an amino group. The compound IV is added in step a) of the process according to the invention if it renders the reaction mixture alkaline. This is the case, for example, if compound IV is present in the form of a water-soluble alkali-metal or alkaline-earth-metal salt of an aminosulphonic acid. Preferably, compound IV is used in an amount of between 0.3 mol, based on 1 mol of compound I.

Co-reacting compound IV may also be added at the beginning of step b) if it reduces the pH. In this case, no salts, but free acids will be used.

At the end of step b) of the process according to the invention, co-reacting agent IV may also be added in order to increase the pH again.

In the novel process, an attempt will be made to bond, in the first phase of the preparation of the condensation product, a maximum amount of sulphonating agent III (sulphite) and aldehyde II (for example, formaldehyde) to 1 mol of compound I (for example, melamine). This reaction can be monitored by determining the free sulphonating agent, for example sulphite. The reaction is continued until the content of free sulphonating agent (sulphite) no longer decreases. The excess sulphonating agent (sulphite) is eliminated by adding an oxidizing agent, for example hydrogen peroxide. According to the invention, it is preferable that, in step b), additional compound I is added only after free sulphonating agent III can no longer be detected.

The process according to the invention can be carried out under various temperature and pH conditions. Preferable is an embodiment in which, in step a) an adjustment is made to a pH of 9 - 13 and a temperature of 65 - 100°C and condensation is carried out until sulphonating agent III is no longer reacted and, in step b) an adjustment is made to a pH in the range 3 - 9 and a temperature in the range 40 - 100°C. In the second phase, the condensation is continued until the product fulfils the requirements for a superplasticizing agent or, in other words, fulfils the definition of NEN 3532. After the desired viscosity has been reached, the condensation reaction is stopped by adding alkali. To guarantee a good stability during storage, the pH is adjusted to 7 - 11 depending on the concentration. At a lower concentration, the pH may be low.

A different polycondensation product will always be produced i.e. a product with a somewhat different chemical structure will always be produced, depending on the amount of compound I (for example, melamine and/or urea) to be added in the second step.

In relation to the present invention the following may also be noted with reference to the example in which, according to the invention, melamine and/or urea, sulphite and formaldehyde are used. An even distribution of sulphite and formaldehyde will be produced over the melamine molecule, which itself is again condensed further to form a polymer composed of sulphonated melamine units. If a portion of the melamine is replaced by urea during the sulphonating phase, in the process according to the invention, this will hydrolyse below a pH of 7.0 and lose almost half of its molar mass, with the result that a large portion of the economic advantage of the use of urea is lost. This hydrolysis will not take place if urea is incorporated during the second phase.

In the process according to the invention, a polymer is probably formed which has more than one sulphite group, joined to the nucleus by unsulphonated amine and/or urea molecules, on the outside of the molecule cluster.

The resins prepared by the process of the invention can be sulphonated and condensed at relatively high temperatures, for example at 95 - 110°C. As a result, the polycondensation can even take place at a pH above pH 7.0, with the result that appreciably lesser amounts of salts are produced after adjusting to a pH of 10.5 at the end of the preparation.

In addition to the technological advantages relating to the temperature sensitivity, the process according to the invention also has economic advantages because, in the process, high percentages of relatively cheap ingredients such as urea and sulphite can be used.

The invention also relates to products, optionally in dried form, which are obtainable or have been obtained by the process described above.

The invention relates to the use of such products as additives or ingredients for hydraulically hardening systems, in particular concrete and anhydride, also in combination with, for example, lignin, naphthalenes, surfactants, accelerators and retarders or directly as auxiliary material.

The invention is explained in greater detail in the examples below.

### Example 1

In the first phase, the ingredients are loaded into a standard reactor provided with stirrer, automatic pH control (by dispensing acid and alkali), heating system and cooling system in the following ratio: 1 mol of melamine, 7 mol of formaldehyde/1 mol of sulphite and water with a theoretical solids content of 75%.

The pH is automatically adjusted to 12.2 and heating is furthermore carried out to 103°C. After the free sulphite no longer decreases, the pH is again adjusted in the second phase to 7.3 and 15 mol% of melamine is added to the mixture and condensation is carried out until the product has a viscosity of approximately 100 cP.

### Example 2

In the first phase, ingredients are added to the abovementioned reactor in a molar ratio which is currently standard for the manufacture of this type of products: melamine, formaldehyde, sulphite 1:3:1, with the exception that only 75% of the melamine is added.

Sufficient water is added for the theoretical solids content to be 38%. The mixture is heated to 75°C while stirring and the pH is adjusted to 10.5. After a decrease in the free sulphite can no longer be observed, the remainder of the melamine is added in the second phase, the mixture is cooled to 50°C and the pH is adjusted to 6 and condensation is carried out until the product has a viscosity of 90 cP

### Example 3

1 mol of melamine, 1 mol of sulphite and 3 mol of formaldehyde and an amount of water is added to a standard reactor so that a product having a solids content of 40% is produced and heating is carried out to 78°C. The pH is adjusted to 11 with NaOH. After free sulphite is no longer detected, the pH is adjusted to 5.5 and the temperature to 55°C. After the correct viscosity has been reached, the pH is again adjusted to between 10 and 11 and the mixture is cooled to 25°C.

### Example 4

According to Example 3, in which the urea is added after no decrease in the amount of free sulphite is observed:

| | melamine | urea | formaldehyde | sulphite |
|---|---|---|---|---|
| a. | 0.9 | 0.1 | 2.9 | 1 |
| b. | 0.8 | 0.2 | 2.8 | 1 |
| c. | 0.7 | 0.3 | 2.7 | 1 |
| d. | 0.6 | 0.4 | 2.6 | 1 |

## Claims

1. Use of an aqueous solution of a polycondensate, obtainable by
a) preparing, In a first step, an aqueous solution of a precondensate composed of: at least one compound I containing at least two amino groups, at least one aldehyde II, at least one sulphonating agent III and, optionally, one or more co-reacting agents IV;
b) converting, in a second step, the precondensate obtained in step a) Into a polycondensate at a lower pH than in step a),
wherein
a) in the first step, the following amounts of the reagents are used per mol of the compound I:
2.8 - 6 mol of the aldehyde II,
0.8 - 2.5 mol of the sulphonating agent III, and
0- 3 mol of the co-reacting agent IV;
b) and in the second step, 0.1 - 1 mol of the additional amount of the compound I, again based on 1 mol of the compound I, and
wherein, at the end of step a) any excess of unreacted compound III is reacted with an oxidizing agent and, in step b) an additional amount of the compound I is added to the precondensation product,
wherein compound I is chosen from the group comprising amino-s-triazines, melamine, urea, thiourea, guanidine, dicyanodiamines, aminocarboxylic acids, aminodicarboxylic acids, aminosulphonic acids and carpolactams, wherein aldehyde II is chosen from the group comprising formaldehyde, acetaldehyde, butyraldehyde, furfuraldehyde and benzaldehyde,
wherein the sulphonating agent III is chosen from the group comprising alkali-metal and alkaline-earth-metal sulphite and alkali-metal and alkaline-earth-metal sulphamate, and
wherein the co-reacting agent (IV) is chosen from the group comprising naphtalenesulphonic acid, mono- and dibenzoic acid, toluene-, xylene- and cumenesulphonic acids (including o-, p- and m-derivatives), fatty acid amine oxides, betaine, quaternary ammonium compounds, ether carbocylic acids, aminosulphonic acids, amino acids, aminocarboxylic acids, aminodicarboxylic acids, hydroxycarboxylic acids, hydroxycarboxylic acid lactones, polyhydroxycarboxylic acid lactones, sulphamic acids, a boron-containing polyhydroxycarboxylic acid or a waver-soluble alkall-metal salt or alkaline-earth-metal salt of such an acid which, as such, has the formula 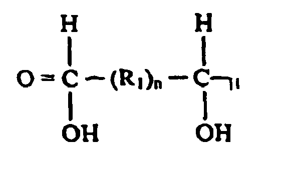 in which
R₁ is 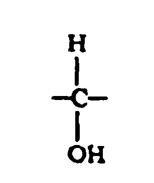 and n = 3 - 8, preferably 4 - 6,
a compound having the general formula
Ar O - [R₁]ₙ - R₂,
where Ar is an optionally substituted benzene radical or naphtalene radical, R₁ is an oxyethylene group, -CH₂CH₂O-, or an oxypropylene group, 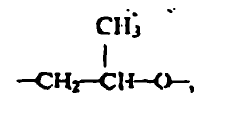 an oxyethylene chain or an oxypropylene chain containing not more than 15 oxyethylene groups or oxypropylene groups, or a combination of oxyethylene groups and oxypropylene groups in a chain, the sum of said groups being not more than 15: the mean value η for n is 1 - 15 and R₂ is hydrogen or In which R₂ is a group having the formule 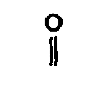 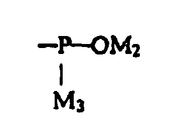 in which M₂ is a hydrogen ion or alkali metal ion and M₃ is -[R₁]ₙ-O Ar, R₁, n and Ar having the abovementioned meaning,
ketones, aliphatic and/or aromatic carboxamides such as formamide, acetamide, propionamide, butyramide, methacrylamide or benzamide, an acid containing at least one SH group or a salt of such an acid, for example a mercaptosulphonic acid or a mercaptocarboxylic acid, as additive for hydraulically setting mortars.

2. Use according to claim 1, wherein, in step b) additional compound I is added only after free sulphonating agent III can no longer be detected.

3. Use according to claim 1 or 2, wherein, in step a), an adjustment is made to a pH of 8 - 13 and a temperature of 65 -100°C and condensation is carried out until sulphonating agent III Is no longer reacted and, in step b) an adjustment is made to a pH in the range 3 - 8 and a temperature In the range 40 - 100°C.

4. Use according to one or more of the preceding claims, wherein the polycondensate fulfils the definition of a plasticizing agent according to NEN 3532.

## Patentansprüche

1. Verwendung einer wässrigen Lösung eines Polykondensates ,
herzustellen
a) in einem ersten Schritt durch Bildung einer wässrigen Lösung eines Vorkondensates, bestehend aus wenigstens einer Verbindung I mit wenigstens zwei Aminogruppen, wenigstens einem Aldehyd II, wenigstens einem Sulfonierungsmittel III und wahlweise einem oder mehreren Reaktionspartnern IV,
b) in einer zweiten Stufe durch Umwandlung des nach Schritt a) hergestellten Vorkondensates in ein Polykondensat mit einem niedrigeren pH-Wert als nach Schritt a),
wobei
a) im ersten Schritt folgende Mengen der Reagenzien je Mol
der Verbindung I:
2,8 - 6 Mol des Aldehyds II,
0,8 - 2,5 Mol des Sulfonierungsmittels III und
0 - 3 Mol des Reaktionspartners IV,
b) und in dem zweiten Schritt 0,1 - 1 Mol der zusätzlichen Menge der Verbindung I, wiederum bezogen auf 1 Mol der Verbindung I verwendet werden und wobei am Ende von Schritt a) jeder Überschuss von unreagierter Verbindung III mit einem Oxydationsmittel zur Reaktion gebracht wird und in Schritt b) eine zusätzliche Menge der Verbindung I dem Vorkondensationsprodukt zugesetzt wird,
wobei die Verbindung I aus der Gruppe gewählt wird, die Amino-s-Triazine, Melamin, Harnstoff, Thioharnstoff, Guanidin, Dizyandiamine, Aminokarboxylsäuren, Aminodikarboxylsäuren, Aminosulfonsäuren und Kaprolaktamen umfasst,
wobei Aldehyd II aus der Gruppe gewählt wird, die Formaldehyd, Azetaldehyd, Butyraldehyd, Furfuraldehyd und Benzaldehyd umfasst,
wobei das Sulfonierungsmittel III aus der Gruppe gewählt wird, die Alkalimetall und Erdalkalimetallsulfit und Alkalimetall und Erdalkalimetallsulfamat umfasst, und
wobei der Reaktionspartner (IV) aus der Gruppe gewählt wird,
die Naphthalinsulfonsäure, Mono- und Dibenzoesäure, Toluol-, Xylol- und Kumolsulfonsäuren (einschließlich O-, p- und m-Derivaten), Fettsäureaminoxide, Betain, quaternäre Ätherkarboxylsäuren, Aminosulfonsäuren, Aminosäuren, Aminokarboxylsäuren, Aminodikarboxylsäuren, Hydrokarboxylsäuren, Hydrokarboxylsäurelaktone, Polyhydroxykarboxylsäurelaktone, Sulfamidsäuren, eine borhaltige Polyhydroxykarboxylsäure oder ein wasserlösliches Alkalimetallsalz oder Erdalkalimetallsalz einer solchen Säure umfasst, welches als solches die Formel 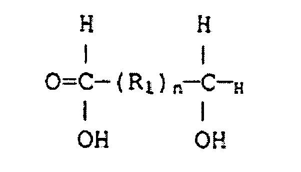 aufweist, worin 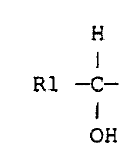 und n = 3 - 8, vorzugsweise 4 - 6,
eine Verbindung mit der allgemeinen Formel
Ar O - [R₁]ₙ - R₂,
wobei Ar ein wahlweise substituiertes Benzolradikal oder Naphthalinradikal, R₁ eine Oxyethylengruppe,
-CH₂CH₂O- oder eine Oxypropylengruppe, 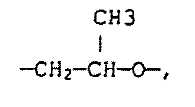 eine Oxyethylenkette oder eine Oxypropylenkette mit nicht mehr als 15 Oxyethylengruppen oder Oxypropylengruppen oder eine Kombination von Oxyethylengruppen und Oxypropylengruppen in einer Kette ist, wobei die Summe der genannten Gruppen 15 nicht übersteigt, während der Mittelwert η für n 1 - 15 ist und R2 Wasserstoff ist, oder worin R2 eine Gruppe mit der Formel 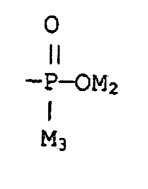 ist, worin M2 ein Wasserstoff-Ion oder ein Alkalimetall-Ion ist
und M3 gleich -[R1]ₙ-O Ar, R₁ , n ist und Ar die oben genannte Bedeutung hat, Ketone, aliphatische und/oder aromatische Karboxamide, wie Formamid, Azetamid, Propionamid, Butyramid, Methacrylamid oder Benzamid, eine Säure, die wenigstens eine SH-Gruppe oder ein Salz einer solchen Säure, zum Beispiel eine Mercaptosulfonsäure oder eine Mercaptokarboxylsäure enthält, als Additiv für hydraulische Mörtel.

2. Verwendung nach Anspruch 1, wobei in Schritt b) die zusätzliche Menge der Verbindung I erst zugesetzt wird, nachdem kein freies Sulfonierungsmittel III mehr festgestellt werden kann.

3. Verwendung nach Anspruch 1 oder 2, wobei in Schritt a) eine Einstellung auf einen pH-Wert von 9 - 13 und eine Temperatur von 65 - 100 °C vorgenommen wird und Kondensation stattfindet, bis das Sulfonierungsmittel III nicht mehr reagiert, und in Schritt b) eine Einstellung auf einen pH-Wert im Bereich 3 - 9 und eine Temperatur im Bereich 40 - 100 °C vorgenommen wird.

4. Verwendung nach einem oder mehreren der vorstehenden Ansprüche,
wobei das Polykondensat die Definition eines Weichmachers nach NEN 3532 erfüllt.

## Revendications

1. Utilisation d'une solution aqueuse d'un produit de polycondensation pouvant être obtenu :
(a) en préparant, au cours d'une première étape, une solution aqueuse d'un produit de précondensation composé d'au moins un composé I contenant au moins deux groupes amino, d'au moins un aldéhyde II, d'au moins un agent de sulfonation III et, éventuellement, d'un ou de plusieurs agents co-réactifs IV ;
(b) en transformant, au cours d'une seconde étape, le produit de précondensation obtenu dans l'étape (a) en un produit de polycondensation à une valeur de pH inférieure à celle de l'étape (a),
où
(a) dans la première étape, les quantités suivantes des autres réactifs sont utilisées par mole de composé I :
entre 2,8 et 6 moles d'aldéhyde II,
entre 0,8 et 2,5 moles d'agent de sulfonation III, et
entre 0 et 3 moles d'agent co-réactif IV ;
(b) et dans la seconde étape, entre 0,1 et 1 mole de quantité supplémentaire de composé I, là encore sur la base de 1 mole de composé I, et
où, à la fin de l'étape (a), tout excès de composé III n'ayant pas réagi est mis a réagir avec un agent oxydant et, dans l'étape (b), une quantité supplémentaire de composé I est ajoutée au produit de précondensation,
où le composé I est choisi dans le groupe constitué par les amino-s-triazines, la mélamine, l'urée, la thio-urée, la guanidine, les dicyanodiamines, les acides aminocarboxyliques, les acides aminodicarboxyliques, les acides aminosulfoniques et les caprolactames,
où l'aldéhyde II est choisi dans le groupe constitué par le formaldéhyde, l'acétaldéhyde, le butyraldéhyde, le furfuraldéhyde et le benzaldéhyde,
où l'agent de sulfonation III est choisi dans le groupe constitué par le sulfite de métal alcalin et de métal alcalino-terreux et le sulfamate de métal alcalin et de métal alcalino-terreux, et
où l'agent co-réactif (IV) est choisi dans le groupe constitué par l'acide naphtalène-sulfonique, l'acide mono- et dibenzoïque, les acides toluène-, xylène- et cumène-sulfoniques (y compris leurs dérivés o-, p- et m-), les oxydes d'amines d'acides gras, la bétaïne, les composés d'ammonium quaternaire, les acides éther-carboxyliques, les acides aminosulfoniques, les acides aminés, les acides aminocarboxyliques, les acides aminodicarboxyliques, les acides hydroxycarboxyliques, les acides hydroxycarboxyliques lactones, les acides polyhydroxycarboxyliques lactones, les acides sulfamiques, un acide polyhydroxycarboxylique contenant du bore ou un sel de métal alcalin ou un sel de métal alcalino-terreux hydrosoluble d'un tel acide qui, en tant que tel, répond à la formule 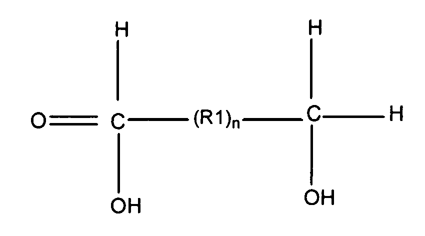 dans laquelle
R₁ représente 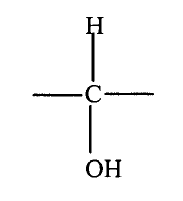 et n vaut entre 3 et 8, de préférence entre 4 et 6,
un composé de formule générale
ArO-[R₁]ₙ-R₂
dans laquelle Ar représente un radical benzène ou un radical naphtalène éventuellement substitué, R₁ est un groupe oxyéthylène, -CH₂CH₂O-, ou un groupe oxypropylène, 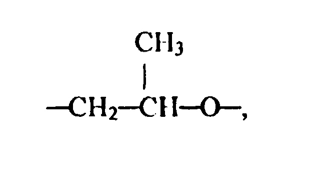 une chaîne oxyéthylène ou une chaîne oxypropylène ne comportant pas plus de 15 groupes oxyéthylène ou oxypropylène, ou une combinaison de groupes oxyéthylène et oxypropylène, dans une chaîne, la somme desdits groupes ne dépassant pas 15 ; la valeur moyenne η de n étant comprise entre 1 et 15, et R₂ représente l'hydrogène,
ou dans laquelle R₂ représente un groupe répondant à la formule 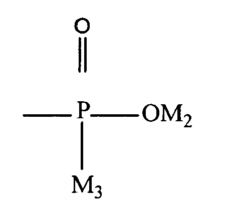 dans laquelle M₂ représente un ion hydrogène ou un ion de métal alcalin et M₃ représente -[R₁]ₙ-OAr, R₁, n et Ar étant tels que définis précédemment,
les cétones, les carboxamides aliphatiques et/ou aromatiques tels que le formamide, l'acétamide, le propionamide, le butyramide, le méthacrylamide ou le benzamide, un acide contenant au moins un groupe SH ou un sel d'un tel acide, par exemple un acide mercaptosulfonique ou un acide mercaptocarboxylique, en tant qu'additif de mortiers à prise hydraulique.

2. Utilisation selon la revendication 1, où, au cours de l'étape (b), un composé I supplémentaire est ajouté, une fois que l'agent de sulfonation III libre n'est plus décelable seulement.

3. Utilisation selon la revendication 1 ou 2, où, au cours de l'étape (a), un ajustement est fait jusqu'à obtention d'un pH entre 9 et 13 et d'une température entre 65 et 100 °C et une condensation est effectuée jusqu'à ce que l'agent de sulfonation III ne réagisse plus et, au cours de l'étape (b), un ajustement est fait jusqu'à obtention d'un pH dans la gamme de 3 à 9 et d'une température dans la plage de 40 à 100 °C.

4. Utilisation selon une ou plusieurs des revendications précédentes, où le produit de polycondensation répond à la définition d'un agent plastifiant conforme à la norme NEN3532.
